# EUROPEAN PATENT SPECIFICATION

(11) **EP 3 664 321 B1**
(45) Date of publication and mention of the grant of the patent: **17.05.2023**
(21) Application number: 18210245.9
(22) Date of filing: 04.12.2018
(51) Int. Cl.: H04B 17/10, H04B 17/17, H04B 17/29, H04B 17/354, H04B 17/391

(54) **METHOD, IDENTIFICATION SYSTEM AS WELL AS COMPUTER PROGRAM FOR IDENTIFYING UNWANTED SIDE EFFECTS IN A RADIO RECEPTION SYSTEM**
VERFAHREN, IDENTIFIKATIONSSYSTEM SOWIE COMPUTERPROGRAMM ZUR ERKENNUNG UNERWÜNSCHTER NEBENWIRKUNGEN IN EINEM FUNKEMPFANGSSYSTEM
PROCÉDÉ, SYSTÈME D'IDENTIFICATION AINSI QUE PROGRAMME INFORMATIQUE PERMETTANT D'IDENTIFIER DES EFFETS SECONDAIRES INDÉSIRABLES DANS UN SYSTÈME DE RÉCEPTION RADIO

(43) Date of publication of application: 10.06.2020
(73) Proprietor: Rohde & Schwarz GmbH & Co. KG, 81671 München (DE)
(72) Inventor: VOLLE, Christian, 81671 München (DE); DIETRICH, Frank, 81671 München (DE)
(74) Representative: Prinz & Partner mbB

(56) References cited:
- WO-A1-2010/043758
- KR-A- 20080 051 050
- US-A1- 2013 309 987
- US-B1- 8 086 187

## Description

The invention relates to a method of identifying unwanted side effects in a radio reception system. Further, the invention relates to an identification system as well as a computer program for identifying unwanted side effects in a radio reception system.

A radio reception system is not an idle system, but it has certain physical limitations like all technical systems. An important limitation in the operation of a radio reception system is the presence of unwanted signals, also called unwanted side effects, which are generated in the radio reception system and which may interfere with the reception of real signals, also called wanted signals. The unwanted side effects may be caused by (inherent) system noise, phase noise, intermodulation products, secondary reception points or self-reception points.

In the state of the art, large technical efforts were made to avoid such unwanted side effects or at least to keep the unwanted side effects as small as possible. However, these effects can never be completely avoided so that radio reception systems have always to be evaluated according to the ability to keep the unwanted side effects as low as possible.

Typically, the characteristics of a radio reception system is of importance due to the evaluation of radio reception systems, the evaluation of signal scenarios and/or during education, training or rather demonstration. The evaluation of radio reception systems may be done by manufacturers as part of a competitor analysis or by a potential purchaser. However, the comparison or rather evaluation is more intuitive than systematic. In a similar manner, the evaluation of a signal scenario at a potential location of a radio reception system is done in an intuitive manner rather than a systematic one. For instance, only strong emitters in the vicinity of the installation site of the radio reception system are taken into account during the evaluation of a signal scenario. Furthermore, technical limitations and unwanted side effects of the radio reception system are only considered individually during the education, training or rather demonstration.

Accordingly, a reliable evaluation of different radio reception systems is not possible due to a missing absolute evaluation standard. The evaluation of installation sites, namely signal scenarios assigned thereto, is not as accurate as desired so that customers may be disappointed due to unwanted side effects which have not been considered during the planning phase. In addition, a real-life scenario for demonstration, education or rather training is not available.

In US 8 086 187 B1, a method to simulate performance of a communication system is described, wherein operational and performance requirements are identified and used for form a radio system model and a communications system model.

WO 2010/043758 A1 shows a receiver that receives at least one radio frequency band, wherein data is collected that is used for simulation purposes.

In US 2013/0309987 A1, a method to analyze and predict the interference susceptibility of receiver designs is described.

KR 10-2008-0051050 A discloses an interference measurement method for simulating a communication system.

Accordingly, there is a need for a possibility to overcome the above mentioned drawbacks in a cost-efficient manner.

### Summary of the invention

The invention is defined by the appended independent claims. Dependent claims constitute embodiments of the invention.

The invention is based on the finding that a model of the respective radio reception system may be used that comprises the mathematical mechanism of the radio reception system so that the respective unwanted side effects assigned to the radio reception system can be simulated appropriately by using the method, the identification system or rather the computer program that runs on the identification system, in particular the processor. Put it another way, the characteristics of the radio reception system with respect to the unwanted side effects can be simulated for the respective signal scenario applied on the (virtual) radio reception system. Thus, the behavior of the radio reception system with regard to unwanted side effects related to the respective signal scenario applied can be investigated.

The at least two system parameters used by the parametrized model for simulating the radio reception system with regard to its characteristics may be obtained from a data sheet of the radio reception system or rather measured. The measurement of the at least two system parameters may be done once or several times to obtain actual values.

The signal scenario applied may represent an intended installation site for the radio reception system.

An aspect provides that the at least two system parameters of the parametrized model correspond to phase noise, system noise, for instance noise figure, spurious signals, intermediate frequency feedthrough, image frequency response, harmonic reception, compression and/or intermodulation products, in particular second order intercept point and/or third order intercept point. The respective system parameters describe the characteristics of the respective radio reception system so that a parametrized model based upon at least two of those system parameters is sufficient to characterize the radio reception system in order to simulate its characteristics or rather behavior with respect to the signal scenario applied.

The at least two system parameters may be stored so that fixed values are used. Alternatively, the at least two system parameters are sensed and inputted into the parametrized model. This ensures that actual values are used for the at least two system parameters.

Generally, different data sets may be used as input data. The respective input data may be input in the identification system. For instance, three different data sets may be used.

The data sets may relate to the signal scenario, the parametrized model or rather parameters relating to the radio reception system as well as simulation characteristics.

According to an aspect, the signal scenario is provided as a list, in particular wherein the list comprises several frequencies and signal strengths associated to the respective frequencies. Hence, data is input that is processed by the identification system for evaluating the characteristics of the radio reception system with respect to the signal scenario applied, in particular wherein the occurring unwanted side effects are evaluated.

Thus, the respective signal scenario to be applied may be provided in a data format that is input electronically. For instance, noise may be provided as a mathematical function of frequency.

Alternatively or additionally, the signal scenario is measured and/or recorded so that it can be applied (at least later). For instance, the signal scenario is measured via the radio reception system. The measured signal scenario or rather the recorded one is converted into data for being input into the parametrized model. In fact, the identification system may be established by the radio reception system itself so that the signal scenario applied is directly measured by the radio reception system which side effects are to be evaluated.

Hence, the signal scenario may be measured so that a real signal scenario is applied. Measuring the signal scenario or rather signals relating to the signal scenario may further comprise the step of converting the signals received into data assigned to the signal scenario wherein the respective data obtained is further processed.

In general, the signal scenario applied may comprise the whole frequency range of the radio reception system or rather a certain portion of the frequency range that is of particular interest. In addition, the signal scenario may only comprise certain signals of the whole signal scenario according to the real application. The certain signals may be discrete signals.

The respective signal scenario applied depends on the respective targets and efforts intended to be made while identifying unwanted side effects in the radio reception system.

Generally, the unwanted side effects may be simulated by the parametrized model while applying the respective signal scenario.

According to another aspect, a spectrum is output that comprises the signal scenario (applied) and the unwanted side effects of the radio reception system on the respective signal scenario applied. Thus, the characteristics of the radio reception system can be investigated by the respective spectrum output. The unwanted side effects that are also output besides the signal scenario applied may relate to intermodulation products, in particular second order intercept point and/or third order intercept point, phase noise, inherent noise, spurious signals and/or compression effects.

The spectrum (level over frequency) may be output graphically.

Particularly, the unwanted side effects of the radio reception system are marked. The respective unwanted side effects may be marked in the spectrum output so that a graphical illustration of the respective unwanted side effects is provided wherein the relative position of the unwanted side effects is directly obvious for the operator of the identification system. Hence, the frequencies as well as the levels of the unwanted side effects are shown.

In addition, the kind of the unwanted side effects may also be indicated so that an operator of the identification system can gather the respective information with respect to the different unwanted side effects that may occur in the radio reception system which parametrized model is used.

Furthermore, the unwanted side effects of the radio reception system may be used for optimizing the reception characteristics of the radio reception system. Thus, the amount of the unwanted side effects as well as their kind may be taken into account by the identification system for recommending certain settings of the radio reception system so as to optimize its reception characteristics. The respective recommendations may be output to the operator so that the operator is enabled to optimize the radio reception system accordingly. In fact, inherent unwanted side effects of the radio reception system may be minimized appropriately.

According to another aspect, a quality criterion is calculated based on the unwanted side effects of the radio reception system determined previously, in particular wherein the quality criterion is a numerical value. Thus, the quality criterion provides information with regard to the suitability of the radio reception system with respect to the signal scenario applied in an easy understandable manner, for instance by a single value. Since the quality criterion is a numerical value, a standardized evaluation basis is provided for comparing different radio reception systems with regard to the signal scenario applied.

Moreover, different signal scenarios may be applied to the same radio reception system leading to different numerical values of the quality criterion which can be compared easily with each other. Hence, a certain installation site with a corresponding signal scenario may be favored due to the respective numerical value obtained.

Another aspect provides that the quality criterion is compared with a threshold value. The threshold value may be a value related to the band allocation, a number of channels in the frequency range, a certain noise level, an absolute sensitivity or rather a squelch level.

Furthermore, the quality criterion and/or the comparison result is graphically output. Thus, the operator of the identification system is directly informed with regard to the quality criterion or rather the comparison result so that the easily understandable numerical value can be compared with the numerical outputs assigned to other radio reception systems and/or other signal scenarios in an intuitive manner.

Pre-defined system settings may be automatically initiated based on the quality criterion. The radio reception system or rather the identification system may be set in a different manner based on the numerical value of the quality criterion determined.

In addition, a number of signals with a level higher than a pre-defined level, for instance a squelch level, and/or a false alarm rate are/is calculated. Thus, further information with regard to the radio reception system and its characteristics may be obtained and displayed for informing the operator.

The radio reception system and its characteristics may be simulated completely, in particular wherein the simulation settings are specified previously. The simulation settings may relate to a frequency range, a frequency resolution and/or an extent of calculations or rather computational power. Therefore, the operator of the identification system is enabled to set the respective simulation settings in an appropriate manner.

Furthermore, the identification system is the radio reception system itself which unwanted side effects are to be identified. The respective receiving member may comprise a data input configured to receive data, namely the signal scenario in a data format. Thus, the radio reception system may be configured to be fed with data used for simulating a certain signal scenario.

Alternatively or additionally, the respective receiving member may comprise an antenna configured to convert a signal received into data to be processed. Hence, the identification system, namely the radio reception system, has an antenna via which real signals are received which contribute to the signal scenario applied.

Generally, the identification system is configured to perform the method mentioned above.

Furthermore, the computer program may run on the processor of the identification system The computer program comprise a program code that causes the identification system to perform the method mentioned above when the computer program is run on the processor of the identification system.

The radio reception system may comprise a spectrum analyzer, a direction finder, a radio receiver and/or other radio units. The respective component(s) may be used for measuring the signal scenario. Moreover, the respective component(s) may be taken into account when establishing the parametrized model of the radio reception system.

As mentioned above, the identification system is established by the radio reception system itself so that the characteristics of the different components are known to the system, in particular the respective system parameters. The identification system may directly measure the signal scenario applied, namely the signals received, which is combined with the characteristics of the radio reception system, namely the system parameters, at the moment when the signals were received.

Therefore, the respective characteristics of the radio reception system, namely the at least two system parameters, are sensed in real time and fed into the parametrized model.

### Detailed Description

The foregoing aspects and many of the attendant advantages of the claimed subject matter will become more readily appreciated as the same become better understood by reference to the following detailed description, when taken in conjunction with the accompanying drawings, wherein:
- Figure 1 schematically shows an identification system according to the invention,
- Figure 2 schematically shows a flow-chart illustrating a method of identifying unwanted side effects according to the invention,
- Figure 3 shows a list illustrating a signal scenario to be applied in a numerical manner,
- Figure 4 shows a spectrum illustrating a signal scenario to be applied,
- Figure 5 shows an output spectrum comprising the signal scenario applied as well as unwanted side effects being marked, and
- Figure 6 shows an output table comprising at least one quality criterion.

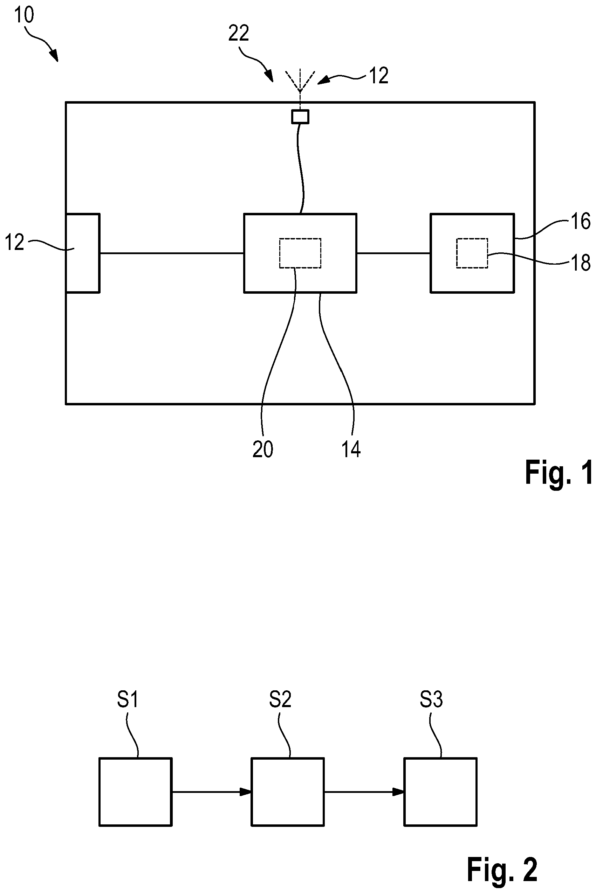

In Figure 1, an identification system 10 is shown for identifying unwanted side effects in a radio reception system.

The identification system 10 comprises a receiving member 12 that is configured to receive a signal scenario to be applied on the radio reception system which unwanted side effects are to be identified, namely its inherent unwanted side effects.

Moreover, the identification system 10 has a processor 14 as well as a memory 16 which are connected with each other in a signal exchangeable manner so that the processor 14 is enabled to access data stored on the memory 16.

In addition, the processor 14 is also connected in a signal exchangeable manner with the receiving member 12 so that the signal scenario received via the receiving member 12 can be accessed by the processor 14 or rather forwarded to the processor 14.

In the memory 16, a parametrized model 18 of the radio reception system is stored so that the processor 14 is enabled to access the parametrized model 18.

The processor 14 is configured to input data of the signal scenario received into the parametrized model 18 wherein the processor 14 is further configured to determine at least the unwanted side effects of the radio reception system with respect to the signal scenario applied.

For instance, a computer program 20 may be provided that is used for identifying the unwanted side effects of the radio reception system. The computer program 20 comprises a program code that is adapted to cause the identification system 10, in particular the processor 14, to perform a method as outlined hereinafter with respect to Figure 2 when the respective computer program 20 is run on the processor 14 of the identification system 10.

The respective method, which may be caused by the computer program 20, is schematically shown in Figure 2 to which reference is made hereinafter additionally.

In a first step S1, a signal scenario to be applied on the respective radio reception system is obtained via the receiving member 12. The signal scenario obtained may be obtained in a data format.

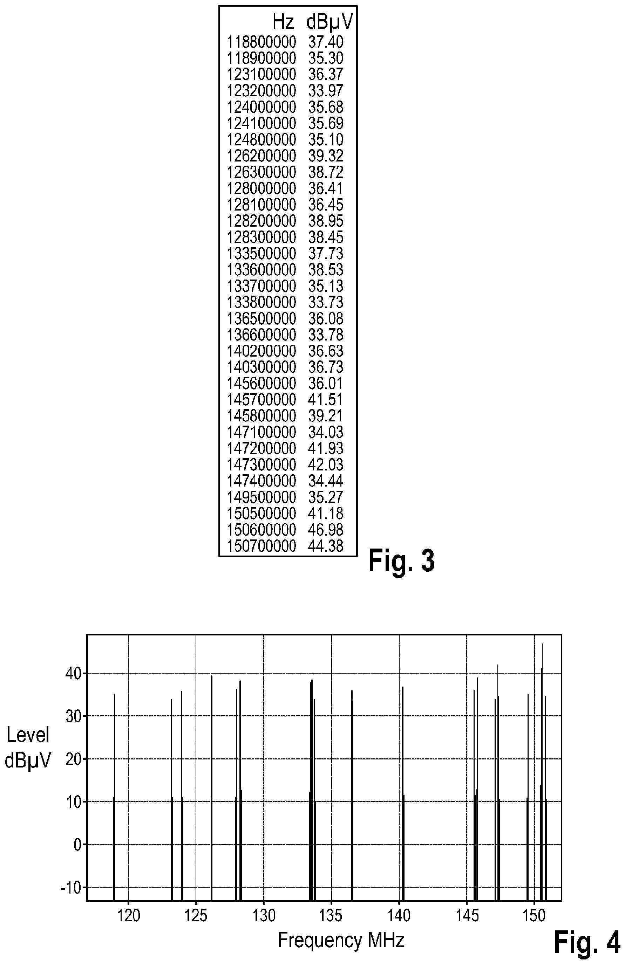

Figure 3 illustrates a list comprising several frequencies and signal strengths associated to the respective frequencies, which may be input to the identification system 10 via the receiving member 12. The list represents the signal scenario to be applied according to which the radio reception system shall be investigated.

Hence, the receiving member 12 may be established by a data input that is configured to receive data. Put it another way, the signal scenario is obtained in a data format.

Alternatively or additionally, the signal scenario may be obtained by a spectrum (measured) as shown in Figure 4, namely levels over frequency.

Hence, the receiving member 12 of the identification system 10 may be established by an antenna 22 as illustrated by dashed lines in Figure 1.

The antenna 22 is configured to receive at least one signal in a wireless manner wherein the at least one signal is assigned to the signal scenario to be applied. The antenna 22 may further be configured to convert the at least one signal received into data which is forwarded to the processor 14 and processed by the processor 14.

The receiving member 12 may also be established by a spectrum analyzer, a direction finder, a radio receiver and/or other any other radio unit configured to receive signals.

In any case, the signal scenario is obtained in the first step S1 by the identification system 10.

In a second step S2, a parametrized model of the radio reception system which unwanted side effects are to be identified is provided.

For instance, the respective parametrized model is loaded from the memory 16 or rather accessed by the processor 14. The parameterized model 18 comprises at least two system parameters of the radio reception system. Thus, it is ensured that the characteristics of the radio reception system 18 can be simulated and evaluated in an appropriate manner.

The at least two system parameters may be stored in the memory 16 as fixed values, for instance obtained from a data sheet or rather measured once. Alternatively, the at least two system parameters are currently sensed and forwarded to the processor 14 for further processing.

For instance, the identification system 10 may be established by the radio reception system itself which unwanted side effects are to be identified. Hence, the respective radio receiving component is provided. In other words, the real radio reception system is used for identifying its own unwanted side effects.

For inputting the respective data, namely the values of the system parameters, the identification system 10 may have an input via which the operator of the identification system 10 is enabled to input the respective data.

In a third step S3, the data of the signal scenario is (automatically) input into the parameterized model 18 to determine the unwanted side effects of the radio reception system with respect to the signal scenario applied.

Thus, the respective characteristics of the radio reception system are determined so that the operator of the identification system 10 is enabled to obtain information with regard to the characteristics of the radio reception system concerning the behavior of the radio reception system at a certain installation site represented by the signal scenario applied.

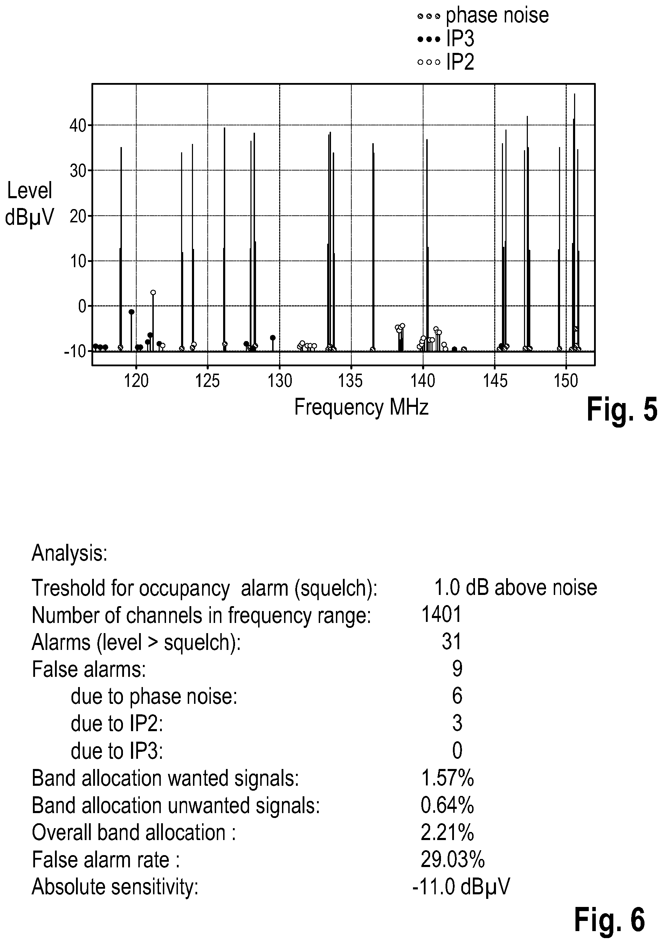

For instance, a spectrum (level over frequency) is output as shown in Figure 5.

The respective spectrum comprises the signal scenario applied as well as the unwanted side effects of the radio reception system on the respective signal scenario applied. These unwanted side effects are gathered due to the simulation provided by using the parameterized model 18. In other words, the unwanted side effects which may occur by the radio reception system are simulated by using the parameterized model 18.

As shown in Figure 5, in particular compared with Figure 4, the unwanted side effects are output in addition to the signals of the signal scenario applied.

Further, the unwanted side effects (simulated) are marked differently so that the respective kinds of the unwanted side effects are illustrated which ensures that the operator retrieves the respective information.

In the shown embodiment, phase noise, second order intercept point IP2 as well as third order intercept point IP3 are additionally illustrated.

Moreover, the inherent noise is also illustrated in the output spectrum as a basis level which becomes obvious by comparing the spectrums shown in Figures 4 and 5.

Additionally or alternatively, for instance upon request by the operator of the identification system 10, a table may be output that illustrates several quality criterions being calculated previously based on the unwanted side effects of the radio reception system determined.

The respective quality criterions may be numerical values so as to simplify comparison between different radio reception systems on which the same signal scenario is applied or rather comparison between different signal scenarios applied on the same radio reception system.

Thus, the quality criterion(s) provide(s) information with regard to the suitability of the respective radio reception system on the respective signal scenario applied.

Generally, the quality criterion may be compared with a threshold value so that the information is output whether a certain parameter reaches or rather exceeds the respective threshold value.

In the table shown in Figure 6, quality criterions as well as the comparison results are graphically illustrated wherein the respective threshold value, for instance a squelch level, is also output.

In addition, the number of channels in the respective frequency range is indicated by 1401.

Moreover the number of alarms, namely signals with a level higher than the squelch level, is output.

Further, the number of false alarms is indicated wherein the false alarms are listed with respect to different sources, namely caused by phase noise, caused by intercept points according to the second order IP2 as well as caused by intercept points according to the third order IP3.

In addition, ratios are calculated based on the respective quality criterions determined previously wherein the rates correspond to band allocation of wanted signals, band allocation of unwanted signals, overall band allocation and a false alarm rate.

Moreover, the absolute sensitivity, namely the minimum of channel noise voltage, is output.

Accordingly, the operator of the identification system 10 obtains many information that can be used for evaluating the radio reception system and its respective suitability. In fact, several radio reception systems can be compared with each other or rather different signal scenarios applied on the same radio reception system may be compared with each other, which relate to different installation sites.

In general, the unwanted side effects of the radio reception system may also be used for optimizing the reception characteristics of the radio reception system.

Hence, recommendations may be determined based on the respective simulation results to improve the reception characteristics by reducing inherent unwanted side effects of the radio reception system.

Furthermore, pre-defined system settings are automatically initiated based on the quality criterion or rather its value determined. Thus, the identification system 10 may interact with the radio reception system to initiate the pre-defined system settings.

Alternatively, the identification system is established by the radio reception system so that the radio reception system determines the quality criterion or rather its value by itself so as to initiate the pre-defined system settings in an automatic manner.

In addition to the parameterized model 18 provided, simulation settings may be specified previously or rather related to the parameterized model 18. The respective simulation settings may also be input via the input of the identification system 10.

The simulation settings may correspond to a frequency range, a frequency resolution and/or an extent of calculations or rather computational power so that the properties of the simulation of the radio reception system and its characteristics may be set by the operator of the identification system 10 beforehand.

The at least two system parameters used by the parametrized model may correspond to phase noise, system noise, spurious signals, intermediate frequency feedthrough, image frequency response, harmonic reception, compression and/or intermodulation products, in particular second order intercept point and/or third order intercept point.

## Claims

1. A method of identifying unwanted side effects in a radio reception system by means of an identification system (10), wherein the identification system (10) is the radio reception system of which the unwanted side effects are to be identified, and wherein the method comprises the following steps:
- Obtaining (S1) a signal scenario to be applied, wherein the signal scenario is obtained in a data format,
- Providing (S2) a parametrized model (18) of the radio reception system of which the unwanted side effects are to be identified, wherein the parametrized model (18) comprises at least two system parameters of the radio reception system, and
- Inputting (S3) data of the signal scenario in the data format into the parametrized model (18) to determine at least the unwanted side effects of the radio reception system on the respective signal scenario applied, and
wherein the at least two system parameters are sensed and inputted into the parametrized model since the identification system (10) is the radio reception system of which the unwanted side effects are to be identified.

2. The method according to claim 1, wherein the at least two system parameters of the parametrized model (18) correspond to phase noise, system noise, spurious signals, intermediate frequency feedthrough, image frequency response, harmonic reception, compression and/or intermodulation products, in particular second order intercept point and/or third order intercept point.

3. The method according to claim 1 or 2, wherein the signal scenario is provided as a list, in particular wherein the list comprises several frequencies and signal strengths associated to the respective frequencies, and/or wherein the signal scenario is measured.

4. The method according to any of the preceding claims, wherein a spectrum is output that comprises the signal scenario and the unwanted side effects of the radio reception system on the respective signal scenario applied.

5. The method according to any of the preceding claims, wherein the unwanted side effects of the radio reception system are marked, in particular wherein the kind of the unwanted side effects is indicated.

6. The method according to any of the preceding claims, wherein the unwanted side effects of the radio reception system are used for optimizing the reception characteristics of the radio reception system.

7. The method according to any of the preceding claims, wherein a quality criterion is calculated based on the unwanted side effects of the radio reception system determined previously, in particular wherein the quality criterion is a numerical value.

8. The method according to claim 7, wherein the quality criterion is compared with a threshold value.

9. The method according to claim 7 or 8, wherein the quality criterion and/or the comparison result is graphically output.

10. The method according to any of the preceding claims, wherein pre-defined system settings are automatically initiated based on the quality criterion.

11. The method according to any of the preceding claims, wherein a number of signals with a level higher than a pre-defined level and/or a false alarm rate are/is calculated.

12. The method according to any of the preceding claims, wherein the radio reception system and its characteristics are simulated, in particular wherein simulation settings are specified previously.

13. An identification system (10) for identifying unwanted side effects in a radio reception system, wherein the identification system (10) is the radio reception system of which the unwanted side effects are to be identified and is configured to sense and input into a parametrized model at least two system parameters, the identification system (10) comprising a receiving member (12) configured to receive a signal scenario to be applied on the radio reception system which unwanted side effects are to be identified, a processor (14) and a memory (16), wherein the parametrized model (18) of the radio reception system of which the unwanted side effects are to be identified is stored in the memory (16), wherein the processor (14) is connected with the receiving member (12) and the memory (16), and wherein the processor (14) is configured to obtain via the receiving member (12) the signal scenario wherein the signal scenario is obtained in a data format, and input data of the signal scenario received into the parametrized model (18) and to determine at least the unwanted side effects of the radio reception system on the respective signal scenario applied.

14. The identification system (10) according to claim 13, wherein the receiving member (12) comprises a data input configured to receive data and/or an antenna (22) configured to convert a signal received into data to be processed.

15. A computer program (20) for identifying unwanted side effects in a radio reception system by using an identification system (10), wherein the identification system (10) is the radio reception system of which the unwanted side effects are to be identified, and wherein the identification system (10) comprises a receiving member (12) configured to receive a signal scenario, a processor (14) and a memory (16), the computer program (20) comprising a program code being adapted to cause the identification system (10) to perform the following steps when the computer program (20) is run on the processor (14) of the identification system (10):
- Obtaining a signal scenario to be applied, wherein the signal scenario is obtained in a data format,
- Loading a parametrized model (18) of the radio reception system of which the unwanted side effects are to be identified, wherein the parametrized model (18) comprises at least two system parameters of the radio reception system, and
- Inputting data of the signal scenario in the data format into the parametrized model (18) to determine at least the unwanted side effects of the radio reception system on the respective signal scenario applied, wherein the at least two system parameters are sensed and inputted into the parametrized model since the identification system (10) is the radio reception system of which the unwanted side effects are to be identified.

## Patentansprüche

1. Verfahren zum Identifizieren unerwünschter Nebenwirkungen in einem Funkempfangssystem durch ein Identifikationssystem (10), wobei das Identifikationssystem (10) das Funkempfangssystem ist, dessen unerwünschte Nebenwirkungen zu identifizieren sind, und wobei das Verfahren die folgenden Schritte umfasst:
- Erhalten (S1) eines anzuwendenden Signalszenarios, wobei das Signalszenario in einem Datenformat erhalten wird,
- Bereitstellen (S2) eines parametrisierten Modells (18) des Funkempfangssystems, dessen unerwünschte Nebenwirkungen zu identifizieren sind, wobei das parametrisierte Modell (18) mindestens zwei Systemparameter des Funkempfangssystems umfasst, und
- Eingeben (S3) von Daten des Signalszenarios in dem Datenformat in das parametrisierte Modell (18), um mindestens die unerwünschten Nebenwirkungen des Funkempfangssystems auf das angewendete jeweilige Signalszenario zu bestimmen, und
wobei die mindestens zwei Systemparameter erfasst und in das parametrisierte Modell eingegeben werden, weil das Identifikationssystem (10) das Funkempfangssystem ist, dessen unerwünschte Nebenwirkungen zu identifizieren sind.

2. Verfahren nach Anspruch 1, wobei die mindestens zwei Systemparameter des parametrisierten Modells (18) Phasenrauschen, Systemrauschen, Störsignalen, Zwischenfrequenzdurchleitung, Bildfrequenzgang, Oberwellenempfang, Komprimierungs- und/oder Intermodulationsprodukten, insbesondere einem Schnittpunkt zweiter Ordnung und/oder einem Schnittpunkt dritter Ordnung entsprechen.

3. Verfahren nach Anspruch 1 oder 2, wobei das Signalszenario als eine Liste bereitgestellt wird, insbesondere wobei die Liste mehrere Frequenzen und Signalstärken umfasst, die mit den jeweiligen Frequenzen verknüpft sind, und/oder wobei das Signalszenario gemessen wird.

4. Verfahren nach einem der vorhergehenden Ansprüche, wobei ein Spektrum ausgegeben wird, das das Signalszenario und die unerwünschten Nebenwirkungen des Funkempfangssystems auf das jeweilige angewendete Signalszenario umfasst.

5. Verfahren nach einem der vorhergehenden Ansprüche, wobei die unerwünschten Nebenwirkungen des Funkempfangssystems markiert werden, insbesondere wobei die Art der unerwünschten Nebenwirkungen angezeigt wird.

6. Verfahren nach einem der vorhergehenden Ansprüche, wobei die unerwünschten Nebenwirkungen des Funkempfangssystems zum Optimieren der Empfangseigenschaften des Funkempfangssystems verwendet werden.

7. Verfahren nach einem der vorhergehenden Ansprüche, wobei auf Basis der zuvor bestimmten unerwünschten Nebenwirkungen des Funkempfangssystems ein Qualitätskriterium berechnet wird, insbesondere wobei das Qualitätskriterium ein numerischer Wert ist.

8. Verfahren nach Anspruch 7, wobei das Qualitätskriterium mit einem Schwellwert verglichen wird.

9. Verfahren nach Anspruch 7 oder 8, wobei das Qualitätskriterium und/oder das Vergleichsergebnis grafisch ausgegeben wird.

10. Verfahren nach einem der vorhergehenden Ansprüche, wobei vordefinierte Systemeinstellungen auf Basis des Qualitätskriteriums automatisch initiiert werden.

11. Verfahren nach einem der vorhergehenden Ansprüche, wobei eine Anzahl von Signalen mit einer höheren Stärke als eine vordefinierte Stärke und/oder eine Fehlalarmrate berechnet werden/wird.

12. Verfahren nach einem der vorhergehenden Ansprüche, wobei das Funkempfangssystem und dessen Eigenschaften simuliert werden, insbesondere wobei Simulationseinstellungen zuvor spezifiziert werden.

13. Identifikationssystem (10) zum Identifizieren unerwünschter Nebenwirkungen in einem Funkempfangssystem, wobei das Identifikationssystem (10) das Funkempfangssystem ist, dessen unerwünschte Nebeneffekte zu identifizieren sind, und das dazu ausgelegt ist, mindestens zwei Systemparameter zu erfassen und in ein parametrisiertes Modell einzugeben, wobei das Identifikationssystem (10) ein Empfangselement (12), das dazu ausgelegt ist, ein auf das Funkempfangssystem, dessen unerwünschte Nebenwirkungen zu identifizieren sind, anzuwendendes Signalszenario zu empfangen, einen Prozessor (14) und einen Speicher (16) umfasst, wobei das parametrisierte Modell (18) des Funkempfangssystems, dessen unerwünschte Nebenwirkungen zu identifizieren sind, im Speicher (16) gespeichert ist, wobei der Prozessor (14) mit dem Empfangselement (12) und dem Speicher (16) verbunden ist, und wobei der Prozessor (14) dazu ausgelegt ist, das Signalszenario via das Empfangselement (12) zu erhalten, wobei das Signalszenario in einem Datenformat erhalten wird, und Daten des empfangenen Signalszenarios in das parametrisierte Modell (18) einzugeben und mindestens die unerwünschten Nebenwirkungen des Funkempfangssystems auf das jeweilige angewendete Signalszenario zu bestimmen.

14. Identifikationssystem (10) nach Anspruch 13, wobei das Empfangselement (12) einen Dateneingang, der dazu ausgelegt ist, Daten zu empfangen, und/oder eine Antenne (22), die dazu ausgelegt ist, ein empfangenes Signal in die zu verarbeitenden Daten umzuwandeln, umfasst.

15. Computerprogramm (20) zum Identifizieren unerwünschter Nebenwirkungen in einem Funkempfangssystem unter Verwendung eines Identifikationssystems (10), wobei das Identifikationssystem (10) das Funkempfangssystem ist, dessen unerwünschte Nebenwirkungen zu identifizieren sind, und wobei das Identifikationssystem (10) ein Empfangselement (12), das dazu ausgelegt ist, ein Signalszenario zu empfangen, einen Prozessor (14) und einen Speicher (16) umfasst, wobei das Computerprogramm (20) einen Programmcode umfasst, der angepasst ist, das Identifikationssystem (10) zu veranlassen, die folgenden Schritte durchzuführen, wenn das Computerprogramm (20) auf dem Prozessor (14) des Identifikationssystems (10) ausgeführt wird:
- Erhalten eines anzuwendenden Signalszenarios, wobei das Signalszenario in einem Datenformat erhalten wird,
- Laden eines parametrisierten Modells (18) des Funkempfangssystems, dessen unerwünschte Nebenwirkungen zu identifizieren sind, wobei das parametrisierte Modell (18) mindestens zwei Systemparameter des Funkempfangssystems umfasst, und
- Eingeben von Daten des Signalszenarios in dem Datenformat in das parametrisierte Modell (18), um mindestens die unerwünschten Nebenwirkungen des Funkempfangssystems auf das jeweilige angewendete Signalszenario zu bestimmen, wobei die mindestens zwei Systemparameter erfasst und in das parametrisierte Modell eingegeben werden, weil das Identifikationssystem (10) das Funkempfangssystem ist, dessen unerwünschte Nebenwirkungen zu identifizieren sind.

## Revendications

1. Procédé d'identification d'effets secondaires indésirables dans un système de réception radio au moyen d'un système d'identification (10), dans lequel le système d'identification (10) est le système de réception radio dont les effets secondaires indésirables doivent être identifiés, et dans lequel le procédé comprend les étapes suivantes :
- obtenir (S1) un scénario de signal à appliquer, dans lequel le scénario de signal est obtenu dans un format de données,
- fournir (S2) un modèle paramétré (18) du système de réception radio dont les effets secondaires indésirables doivent être identifiés, dans lequel le modèle paramétré (18) comprend au moins deux paramètres de système du système de réception radio, et
- entrer (S3) des données du scénario de signal dans le format de données dans le modèle paramétré (18) pour déterminer au moins les effets secondaires indésirables du système de réception radio sur le scénario de signal appliqué respectif, et
dans lequel les au moins deux paramètres de système sont détectés et entrés dans le modèle paramétré, étant donné que le système d'identification (10) est le système de réception radio dont les effets secondaires indésirables doivent être identifiés.

2. Procédé selon la revendication 1, dans lequel les au moins deux paramètres de système du modèle paramétré (18) correspondent à un bruit de phase, un bruit de système, des signaux parasites, une traversée de fréquence intermédiaire, une réponse en fréquence d'image, une réception harmonique, une compression et/ou des produits d'intermodulation, en particulier un point d'interception de deuxième ordre et/ou un point d'interception de troisième ordre.

3. Procédé selon la revendication 1 ou 2, dans lequel le scénario de signal est fourni sous forme de liste, en particulier dans lequel la liste comprend plusieurs fréquences et des intensités de signal associées aux fréquences respectives, et/ou dans lequel le scénario de signal est mesuré.

4. Procédé selon l'une quelconque des revendications précédentes, dans lequel un spectre, comprenant le scénario de signal et les effets secondaires indésirables du système de réception radio sur le scénario de signal appliqué respectif, est délivré.

5. Procédé selon l'une quelconque des revendications précédentes, dans lequel les effets secondaires indésirables du système de réception radio sont marqués, en particulier dans lequel le type des effets secondaires indésirables est indiqué.

6. Procédé selon l'une quelconque des revendications précédentes, dans lequel les effets secondaires indésirables du système de réception radio sont utilisés pour optimiser les caractéristiques de réception du système de réception radio.

7. Procédé selon l'une quelconque des revendications précédentes, dans lequel un critère de qualité est calculé sur la base des effets secondaires indésirables du système de réception radio préalablement déterminés, en particulier dans lequel le critère de qualité est une valeur numérique.

8. Procédé selon la revendication 7, dans lequel le critère de qualité est comparé à une valeur seuil.

9. Procédé selon la revendication 7 ou 8, dans lequel le critère de qualité et/ou le résultat de comparaison est délivré graphiquement.

10. Procédé selon l'une quelconque des revendications précédentes, dans lequel des configurations de système prédéfinies sont initiées automatiquement sur la base du critère de qualité.

11. Procédé selon l'une quelconque des revendications précédentes, dans lequel un certain nombre de signaux, avec un niveau supérieur à un niveau prédéfini et/ou un taux de fausses alarmes, est calculé.

12. Procédé selon l'une quelconque des revendications précédentes, dans lequel le système de réception radio et ses caractéristiques sont simulés, en particulier dans lequel des configurations de simulation sont préalablement spécifiées.

13. Système d'identification (10) pour identifier des effets secondaires indésirables dans un système de réception radio, dans lequel le système d'identification (10) est le système de réception radio dont les effets secondaires indésirables doivent être identifiés, et est configuré pour détecter et entrer dans un modèle paramétré au moins deux paramètres de système, le système d'identification (10) comprenant un élément de réception (12) configuré pour recevoir un scénario de signal à appliquer au système de réception radio dont les effets secondaires indésirables doivent être identifiés, un processeur (14) et une mémoire (16), dans lequel le modèle paramétré (18) du système de réception radio dont les effets secondaires indésirables doivent être identifiés est stocké dans la mémoire (16), dans lequel le processeur (14) est connecté à l'élément de réception (12) et à la mémoire (16), et dans lequel le processeur (14) est configuré pour obtenir, via l'élément de réception (12), le scénario de signal dans lequel le scénario de signal est obtenu dans un format de données, et entrer des données du scénario de signal reçu dans le modèle paramétré (18), et pour déterminer au moins les effets secondaires indésirables du système de réception radio sur le scénario de signal appliqué respectif.

14. Système d'identification (10) selon la revendication 13, dans lequel l'élément de réception (12) comprend une entrée de données configurée pour recevoir des données et/ou une antenne (22) configurée pour convertir un signal reçu en données à traiter.

15. Programme informatique (20) pour identifier des effets secondaires indésirables dans un système de réception radio en utilisant un système d'identification (10), dans lequel le système d'identification (10) est le système de réception radio dont les effets secondaires indésirables doivent être identifiés, et dans lequel le système d'identification (10) comprend un élément de réception (12) configuré pour recevoir un scénario de signal, un processeur (14) et une mémoire (16), le programme informatique (20) comprenant un code de programme qui est adapté pour amener le système d'identification (10) à réaliser les étapes suivantes lorsque le programme informatique (20) est exécuté sur le processeur (14) du système d'identification (10) :
- obtenir un scénario de signal à appliquer, dans lequel le scénario de signal est obtenu dans un format de données,
- charger un modèle paramétré (18) du système de réception radio dont les effets secondaires indésirables doivent être identifiés, dans lequel le modèle paramétré (18) comprend au moins deux paramètres de système du système de réception radio, et
- entrer des données du scénario de signal dans le format de données dans le modèle paramétré (18) pour déterminer au moins les effets secondaires indésirables du système de réception radio sur le scénario de signal appliqué respectif, dans lequel les au moins deux paramètres de système sont détectés et entrés dans le modèle paramétré, étant donné que le système d'identification (10) est le système de réception radio dont les effets secondaires indésirables doivent être identifiés.
